(19) Europäisches Patentamt
European Patent Office
Office européen des brevets

(11) **EP 0 837 302 B1**

(12) **FASCICULE DE BREVET EUROPEEN**

(45) Date de publication et mention
de la délivrance du brevet:
**29.01.2003 Bulletin 2003/05**

(51) Int Cl.⁷: $G01C\ 19/72$

(21) Numéro de dépôt: **97402475.4**

(22) Date de dépôt: **20.10.1997**

(54) **Gyroscope à fibre optique multimode**

Optischer Faserkreisel mit mehreren Betriebsarten

Multimode optical fibre gyroscope

(84) Etats contractants désignés:
**DE FR GB IT**

(30) Priorité: **21.10.1996 FR 9612738**

(43) Date de publication de la demande:
**22.04.1998 Bulletin 1998/17**

(73) Titulaire: **SAGEM SA**
**75116 Paris (FR)**

(72) Inventeurs:
• **Audren, Jean-Thierry**
**78470 St. Remy les Chevreuse (FR)**

• **Roosen, Géerald**
**78720 La Celle Les Bordes (FR)**
• **Delaye, Philippe**
**75010 Paris (FR)**

(74) Mandataire: **Schrimpf, Robert et al**
**Cabinet Regimbeau**
**20, rue de Chazelles**
**75847 Paris cedex 17 (FR)**

(56) Documents cités:
**EP-A- 0 079 268**       **EP-A- 0 455 530**
**FR-A- 2 503 862**       **US-A- 4 944 591**

# Description

La présente invention est relative aux gyroscopes à fibre optique.

Les gyroscopes à fibre optique sont désormais classiquement connus.

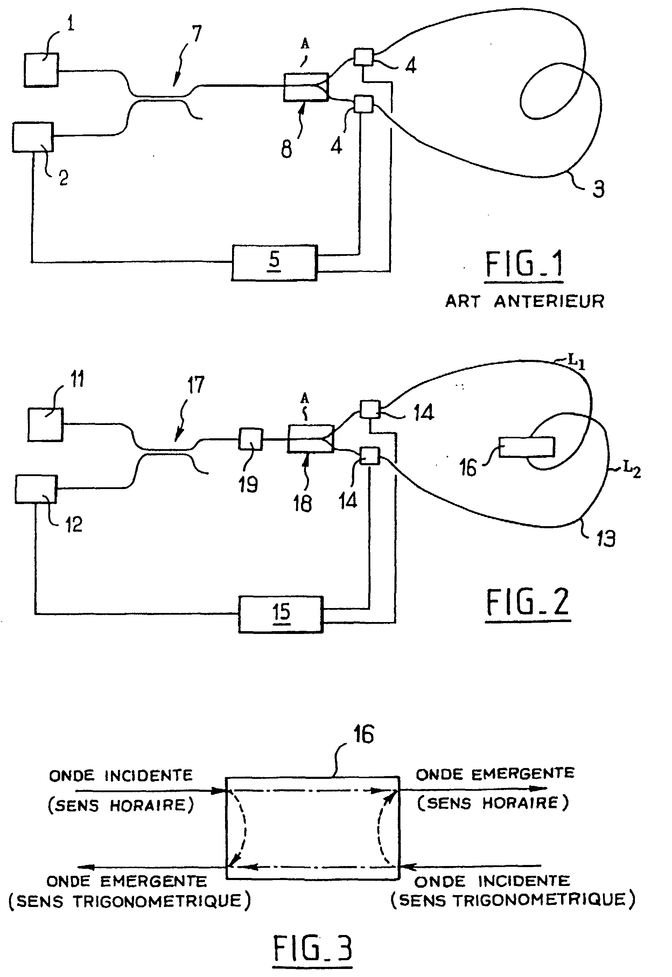

Ils comportent généralement, ainsi qu'illustré schématiquement sur la figure 1, un module d'émission laser 1 et un module de détection 2 reliés par un coupleur 7 et une jonction 8 en Y à une fibre optique en boucle 3, ainsi que des moyens de modulation 4 disposés au niveau des extrémités d'entrée/sortie de la boucle, au voisinage du point - référencé par A sur la figure 1 - où lesdites extrémités de la boucle 3 se rejoignent, ces moyens 4 étant commandés par une unité de traitement 5 sur laquelle les signaux en sortie du module 2 sont envoyés.

De tels gyroscopes exploitent l'effet Sagnac qui prend naissance dans la boucle, lorsque celle-ci est soumise à une rotation autour de son axe.

L'onde qui tourne dans le sens de la rotation qui est imposée à la boucle subit un déphasage $\phi_1$ de :

$$\phi_1 = KL - \frac{2\pi RL\Omega}{\lambda C}$$

avec :

K = nombre d'onde = $2\pi/\lambda$
R = rayon de la bobine
L = longueur du trajet optique dans la fibre
$\Omega$ = vitesse angulaire
$\lambda$ = longueur d'onde
C = vitesse de la lumière

tandis que l'onde qui tourne en sens inverse subit un déphasage $\phi_2$ de :

$$\phi_2 = KL + \frac{2\pi RL\Omega}{\lambda C}$$

Le module de détection 2 et l'unité de traitement 5 permettent en théorie de mesurer sur le signal de sortie le déphasage :

$$\phi_2 - \phi_1 = \frac{4\pi RL\Omega}{\lambda C}$$

ledit signal de sortie correspondant à l'interférence des deux ondes lorsqu'elles se retrouvent au point A après avoir parcouru l'ensemble de la bobine.

Toutefois, dans la réalité, le terme KL est considérablement plus grand que $\frac{2\pi RL\Omega}{\lambda C}$, ce rapport pouvant atteindre 1015.

On comprend par conséquent que le bon fonctionnement des gyroscopes à fibres optiques nécessite une parfaite réciprocité entre les trajets optiques dans un sens et dans un autre, c'est-à-dire que le terme KL de l'équation de $\phi_1$ doit être strictement égal au terme KL de l'équation de $\phi_2$.

De ce fait, les gyroscopes optiques ne travaillent habituellement qu'avec des fibres monomodes à conservation de polarisation. Dans le cas de fibres multimodes, les résultats, pour une structure du type de celle illustrée sur la figure 1, seraient perturbés par les mélanges et interférences entre les différents modes, chaque mode correspondant à une valeur de L différente.

Toutefois, les fibres monomodes à conservation de polarisation sont d'une fabrication beaucoup plus onéreuse que les fibres multimodes.

Un but de l'invention est donc de proposer un gyroscope à fibre multimode dans lequel les différents modes sont correctement recombinés, sans que leurs ondes n'interfèrent les unes avec les autres.

Il a déjà été proposé pour résoudre ce problème de réaliser des gyroscopes à fibre multimode et à conjugaison de phase.

On rappelle que les matériaux à conjugaison de phase (abusivement appelés "miroirs"p à conjugaison de phase) sont des matériaux non-linéaires, par exemple des cristaux photoréfractifs, dans lesquels les interférences entre une onde incidente et une onde pompe créent des réseaux d'indices. L'onde conjuguée obtenue en sortie d'un tel cristal est le résultat de la diffraction de l'onde pompe sur ce réseau d'indices.

Or, la construction des réseaux d'indices est très lente devant le temps que met la lumière pour traverser lesdits réseaux dans les matériaux photoréfractifs, de sorte qu'une variation rapide des paramètres de l'onde incidente ne se retrouve pas sur l'onde conjuguée, alors que les variations rapides des paramètres de l'onde pompe se retrouvent sur l'onde conjuguée.

Pour ces raisons, les gyroscopes à conjugaison de phase proposés à ce jour présentent des temps de réponse importants.

A titre d'exemple, on démontre qu'avec des structures gyroscopiques à conjugaison de phase telles que proposées dans :

[1] FR 2 503 862 - "Dispositif optique inter-férométrique avec miroir(s) à conjugaison de phase, en particulier gyromètre laser" - C. Bordé - CNRS ;

[2] Applied Optics, Vol 25, n° 7, 1er avril 1986, "Phase conjugate fiber optic gyro", un déphasage dans la boucle du gyroscope de $\Delta\Phi$ établi pendant une durée inférieure au temps de réponse du cristal à conjugaison de phase se traduit, selon que ledit déphasage est réciproque ou non, par un déphasage de $\Delta\Phi$ ou de $-\Delta\Phi$ sur le signal de sortie détecté, alors que pour un déphasage établi pendant une durée supérieure au temps de réponse du cristal, le déphasage sur le signal de sortie détecté est de $2\Delta\Phi$.

[3] EP 79268 - Interféromètre de type Michelson à miroir photoréfractif.

De même, avec les structures de gyroscope à miroir à conjugaison de phase autopompé telles que proposées dans-:

[4] Optics Letters, Vol 11, n° 10, octobre 1986, "Self pumped phase conjugate fiber optic gyro",

[5] Optics letters, Vol 12, n° 12, décembre 1987, "Phase conjugate multimode fiber gyro", C*W.H. Chen, P.J. Wang,

[6] SPIE, Vol 838, Fiber optic and laser sensors, 1987, "Phase conjugate fiber optic gyroscope with multimode fibers",

[7] Yasuo Tamita, IEEE Journal of quantum electronics, vol 25, n° 3, mars 1989, "Polarization and spatial recovery by modal dispersal and phase conjugaison-: properties and applications"

un déphasage dans la boucle du gyroscope de $\Delta\Phi$ établi pendant une durée inférieure au temps de réponse du cristal à conjugaison de phase se traduit, selon que ledit déphasage est réciproque ou non, par un déphasage de $2\,\Delta\Phi$ ou de 0 sur le signal de sortie détecté, alors que pour un déphasage établi pendant une durée supérieure au temps de réponse du cristal, le déphasage sur le signal détecté est de $2\,\Delta\Phi$.

Par conséquent, avec les gyroscopes et gyroscopes à conjugaison de phase de l'art antérieur, il n'est pas possible de travailler avec des signaux de fréquences supérieures à la fréquence qui correspond au temps de réponse de leur cristal à conjugaison de phase.

En particulier, ces temps de réponse importants empêchent d'utiliser ces gyroscopes à conjugaison de phase avec des modulations de déphasage telles que mises en oeuvre par l'unité de traitement 5 et les moyens de modulation 4 de la structure de la figure 1, ces modulations de déphasage nécessitant des temps de réponse rapides.

Or, les traitements de modulation de déphasage - qui permettent de s'affranchir de la forte non linéarité par rapport à la puissance des détecteurs en fonction de la phase - s'avèrent être essentiels au bon fonctionnement des gyroscopes actuels.

L'invention propose quant à elle un gyroscope à fibre multimode et à conjugaison de phase qui ne présente pas ces inconvénients.

La solution selon l'invention consiste à utiliser un dispositif formant "miroir" à double conjugaison de phase disposé dans la boucle, de façon que la lumière arrive sur ce dispositif d'un côté et de l'autre de celui-ci, la conjugaison de phase d'un côté et de l'autre dudit dispositif étant pompée par l'onde arrivant sur celui-ci du côté opposé à celui d'où repart l'onde conjuguée.

D'autres caractéristiques et avantages de l'invention ressortiront encore de la description qui suit. Cette description est purement illustrative et non limitative. Elle doit être lue en regard des dessins annexés sur lesquels :

. la figure 1, déjà analysée, est une représentation schématique d'un gyroscope à fibre optique conforme à l'art antérieur ;

. la figure 2 est une représentation schématique d'un gyroscope conforme à un mode de réalisation possible de l'invention ;

. la figure 3, enfin, est une représentation schématique d'un détail de la figure 2.

Le gyroscope à fibre optique illustré sur la figure 2 comporte, de la même façon que le gyroscope de la figure 1, une unité d'émission 11 et une unité de détection 12 reliées par un coupleur 17 et une jonction en Y 18 à une boucle optique 13 qui présente des moyens de modulation 14.

Il comporte également une unité de traitement 15 qui commande ces moyens de modulation 14 et sur laquelle les signaux en sortie du module 12 sont envoyés.

La boucle optique 13 est une boucle en fibre multimode dans laquelle est intégré un dispositif 16, qui constitue un "miroir" à double conjugaison de phase. Pour une présentation générale des miroirs à double conjugaison de phase, on pourra avantageusement se référer à :

[8] CRONIN GOLOMB - Applied physics letters 47,1131 - 1985.
[9] WEISS STERNKLAR FISHER - Optics letters, Vol 12 - n° 2, page 114, 115 - 1987. Les deux branches de la boucle 13 de part et d'autre de ce miroir 16 sont désignées par L1 et L2.

La conjugaison de phase d'un côté et de l'autre dudit "miroir" 16 est pompée par l'onde arrivant sur celui-ci du côté opposé à celui d'où repart l'onde conjuguée.

C'est ce qui a été illustré sur la figure 3, sur laquelle les traits pointillés représentent les phénomènes de conjugaison de phase, alors que les traits mixtes représentent les phénomènes de diffraction.

Le fonctionnement de cette structure peut être appréhendé de deux façons différentes selon que les variations de phase des ondes qui sont incidentes par rapport au "miroir" 16 s'établissent de façon rapide ou lente par rapport au temps de réponse dudit "miroir".

Dans le cas de déphasages rapides, le gyroscope peut être vu comme un gyroscope classique, en ce sens que le faisceau optique qui arrive sur le dispositif 16 par la branche L1 (respectivement L2) traverse ledit dispositif 16 en étant diffracté, puis se propage dans la branche L2 (resp. L1) avant d'être recombiné au point A de jonction des branches L1 et L2.

En d'autres termes, les déphasages rapides des ondes pompes se retrouvent sur les ondes qui arrivent au point A après s'être propagées dans un sens et dans l'autre de la boucle 13.

Ainsi, un déphasage réciproque $\Delta\Phi$ dans la boucle 13 se traduit par un déphasage nul sur le signal recombiné au point A, tandis qu'un déphasage ΔΦ non réciproque se traduit par un déphasage de 2 ΔΦ sur le signal recombiné.

Dans le cas de déphasages lents, on peut considérer que le dispositif 16 joue son rôle de "miroir" à conjugaison de phase.

La lumière qui arrive sur le cristal 16 par la branche L1 (resp. L2) est "réfléchie" dans ladite branche tout en étant conjuguée en phase et repart à travers la branche L1 (resp. L2) avant d'être recombinée au point A.

Bien entendu, un déphasage réciproque dans la boucle 13 se traduit pour chacune des branches L1 et L2 par un déphasage nul sur le signal aller-retour qui arrive au point A pour y être recombiné.

Et un déphasage ΔΦ non réciproque dans la boucle 13 se traduit par un déphasage de 2ΔΦ sur le signal recombiné.

Ainsi, la sensibilité du gyroscope à un déphasage rapide ou à un déphasage lent est la même. Dans les deux cas, le déphasage dû à l'effet Sagnac de l'onde recombinée est de $\frac{4\pi R(L_1 + L_2)\Omega}{\lambda c}$.

Par conséquent, on dispose d'un gyroscope à fibre multimode et conjugaison de phase qui présente une sensibilité uniforme aux entrées.

Une des conséquences est qu'il est possible avec une telle structure à fibre multimode de mettre en oeuvre - par l'intermédiaire des moyens 14 et de l'unité 15 - une modulation sur les signaux en entrée de la boucle 13. Ces modulations et les traitements sur le signal recombiné peuvent par exemple être du type décrits dans EP 0 359 666 ou EP 0 455 530, auxquels on se référera avantageusement.

Le "miroir" 16 à conjugaison de phase est avantageusement constitué par un cristal photoréfractif, ce qui permet des fonctionnements avec des faibles niveaux de puissance pour les ondes de pompe, par exemple un cristal d'oxyde de bismuth et de silicium (BSO ou Bi12 SiO20) ou de titanate de baryum (TiO3 Ba).

Il convient toutefois de noter que la conjugaison de phase dans les matériaux photoréfractifs a généralement lieu sur une seule polarisation de lumière.

Pour résoudre cette difficulté, plusieurs solutions sont envisageables.

L'une d'elles consiste à disposer entre les modules 11 et 12 et la boucle 13 un filtre spatial monomode - qui est par exemple réalisé par une portion de fibre monomode, éventuellement à conservation de polarisation entre le coupleur 17 et le séparateur 18 - ainsi qu'éventuellement un polariseur 19 (figure 2).

A la sortie du séparateur 18, la lumière est couplée dans les fibres multimodes de la boucle 13.

Elle va alors se propager dans ladite boucle 13 selon de nombreux modes qui vont donner lieu à une grande variété de polarisation à l'arrivée sur le "miroir" 16 à conjugaison de phase. Les parties des ondes incidentes qui sont polarisées selon l'axe actif du cristal vont donner lieu au phénomène de double conjugaison de phase et remonter jusqu'au séparateur 18 selon les mêmes modes de propagation et pourront donc entrer dans le guide monomode du séparateur.

Les deux parties polarisées orthogonalement à l'axe actif du cristal vont être diffractées aléatoirement par le réseau construit pour l'autre polarisation et vont remonter jusqu'au séparateur pour des modes sans rapport avec les modes d'aller. Le couplage avec le séparateur monomode 18 va donc être très faible et la lumière ne pourra y pénétrer que très faiblement.

Une amélioration de cette solution est de choisir pour le miroir à double conjugaison de phase un cristal biréfringent séparant spatialement les polarisations pour éliminer celle des deux qui ne sera pas conjuguée et sera diffractée. Ceci revient à mettre un polariseur sur chaque face du cristal.

Une autre solution encore consiste à choisir pour la réalisation du "miroir" à conjugaison de phase 16 un cristal capable de conjuguer les deux polarisations, par exemple le BSO.

Le BSO possède en effet en plus de sa propriété de photoréfractivité exploitée pour la conjugaison de phase, une activité optique. Au titre de cette propriété, la polarisation de la lumière tourne au cours de sa propagation dans le cristal. Selon la longueur d'onde utilisée, elle peut faire un tour complet en quelques millimètres. Ainsi, la conjugaison de phase pour chaque polarisation est réalisée dans différentes tranches du cristal perpendiculairement à la direction moyenne de propagation. Une condition de fonctionnement est que la lumière entrant de chaque côté du cristal possède plusieurs polarisations afin que les interférences aient forcément lieu pour chacune des polarisations. Ceci est obtenu en s'assurant qu'une grande variété de mode est utilisée dans la propagation dans la fibre, la variété de ces modes engendrant la variété des polarisations.

D'autres solutions que les deux solutions ci-dessus présentées sont bien entendu possibles.

Notamment, on pourrait également prévoir des dispositifs séparateurs rotateurs recombineurs du type de ceux décrits par exemple dans la référence [3] précitée.

De façon avantageuse encore, on choisit pour les deux branches L1 et L2 de la boucle 13 une longueur sensiblement égale, ce qui permet de minimiser la sensibilité du gyroscope à l'adaptation permanente du cristal aux évolutions du front d'onde.

On peut en effet remarquer que si l'on se place au milieu de la bobine de la boucle 13, l'effet Sagnac produit dans les bras L1 et L2 des ondes contre-propagatives, dont les déphasages sont égaux et de signe opposé. Comme les sens de propagation sont inversés, les deux ondes restent en phase (l'une avance pendant que l'autre recule), ce qui est précisément le phénomène que l'on cherche généralement à réaliser par l'intermédiaire des moyens de modulation de phase 14, qui sont habituellement utilisés avec les mêmes amplitudes et en opposition de phase. Par conséquent, le positionnement du "miroir" 16 à conjugaison de phase au milieu de la boucle apparaît comme particulièrement intéressant.

Egalement, la jonction en Y 17 est choisie parfaitement symétrique de façon que les puissances lumineuses arrivant de chaque côté du cristal soient les plus voisines possibles, le fonctionnement du cristal étant alors optimal.

On notera que si le "miroir" 16 est légèrement décalé par rapport à cette position, il subira - outre un léger déphasage dû à la non symétrie de l'effet Sagnac - des pics de décalage où les interférences seront en opposition de phase tendant à inscrire un autre réseau non désiré. Ce décalage sera acceptable tant que le rapport 2d/L restera petit - où d est le décalage du "miroir" 16 par rapport au milieu de la boucle 13 et L la longueur de fibre. Par exemple, pour une longueur de boucle de 1 km, un décalage de 5 cm est parfaitement tolérable (2d/L = 10-4).

Par ailleurs, il est préférable que l'onde incidente et l'onde pompe ne présentent pas une cohérence temporelle parfaite, laquelle induirait des effets parasites dans le cristal. Les interférences doivent cependant rester spatialement cohérentes dans le cristal, ce qui exige que la longueur de la cohérence Lc de la source 11 soit plus grande que l'épaisseur e traversée dans le dispositif 16.

Pour préserver ces deux conditions, il convient de respecter les inégalités

$$2d > Lc > e$$

l'inégalité 2d > LC induisant en effet par la dissymétrie du chemin la première condition d'incohérence temporelle.

## Revendications

1. Gyroscope, du type présentant une boucle (13) à fibre optique multimode dans laquelle la lumière se propage dans un sens et dans un autre avant d'être recombinée, ainsi qu'un dispositif (16) formant "miroir" à conjugaison de phase, **caractérisé en ce que** ce dispositif (16) est un "miroir" à double conjugaison de phase et est disposé dans la boucle (13), de façon que la lumière arrive sur ce dispositif d'un côté et de l'autre de celui-ci, le dit dispositif étant adapté pour que la lumière incidente serve, de chaque côté du dispositif, d'onde pompe pour la conjugaison de phase de l'onde incidente arrivant de l'autre côté du dispositif.

2. Gyroscope selon la revendication 1, **caractérisé en ce qu'**il comporte entre d'une part des moyens (11) d'émission du faisceau lumineux et des moyens de détection (12) du signal recombiné et d'autre part la jonction (A-18) entre les extrémités de la boucle (13) des moyens de filtrage monomode.

3. Gyroscope selon la revendication 2, **caractérisé en ce qu'**il comporte en outre des moyens de polarisation (19) entre d'une part les moyens d'émission (11) du faisceau lumineux et les moyens de détection (12) du signal recombiné et d'autre part la jonction (A-18) entre les extrémités de la boucle (13).

4. Gyroscope selon l'une des revendications précédentes, **caractérisé en ce que** le dispositif (16) formant "miroir" à double conjugaison de phase est un cristal photoréfractif.

5. Gyroscope selon les revendications 3 et 4 prises en combinaison, **caractérisé en ce que** le cristal (16) est biréfringent.

6. Gyroscope selon la revendication 4, **caractérisé en ce que** le cristal (16) est d'un type capable de conjuguer les deux polarisations, par exemple un cristal de BSO.

7. Gyroscope selon l'une des revendications précédentes, **caractérisé en ce que** les deux branches (L1, L2) de la boucle de part et d'autre de ce dispositif (16) formant "miroir" à double conjugaison de phase sont sensiblement de longueur égale.

8. Gyroscope selon l'une des revendications précédentes, **caractérisé en ce que** l'élément optique (18) qui réalise la jonction entre les deux extrémités de la boucle (13) est symétrique.

9. Gyroscope selon la revendication 8, **caractérisé en ce que** sa source d'émission (11) présente une longueur de cohérence Lc telle que

$$2d > Lc > e$$

où e est l'épaisseur du dispositif (16) formant "miroir" à double conjugaison de phase et d le décalage dudit dispositif (16) par rapport au milieu de la boucle (13).

10. Gyroscope selon l'une des revendications précédentes, **caractérisé en ce qu'**il comporte des moyens (14, 15) pour moduler en phase les signaux en entrée de la boucle (13).

## Patentansprüche

1. Gyroskop, vom Typ umfassend eine Schleife (13) aus Multi-Mode-Lichtfaserkabel, in dem das Licht in einer Richtung und einer anderen propagiert, bevor es rekombiniert wird, sowie eine Vorrichtung (16), die einen phasenkonjugierenden "Spiegel" bildet, **dadurch gekennzeichnet, daß** diese Vorrichtung (16) ein doppelt-phasenkonjugierender "Spiegel" ist und auf solche Weise in der Schleife (13) angeordnet ist, daß das Licht auf dieser Vorrichtung von deren einen und deren anderen Seite ankommt, und besagte Vorrichtung so angepaßt ist, daß das einfallende Licht auf jeder Seite der Vorrichtung als Pumpwelle für die Phasenkonjugation der auf der anderen Seite der Vorrichtung einfallenden Welle dient.

**2.** Gyroskop nach Anspruch 1, **dadurch gekennzeichnet, daß** es zwischen einerseits den Mitteln zur Emission (11) des Lichtstrahls und den Mitteln zum Nachweis (12) des rekombinierten Signals und andererseits der Verbindung (A-18) der Enden der Schleife (13) Mittel zur Mono-Mode-Filterung umfaßt.

**3.** Gyroskop nach Anspruch 2, **dadurch gekennzeichnet, daß** es außerdem Polarisationsmittel (19) zwischen einerseits den Mitteln zur Emission (11) des Lichtstrahls und den Mitteln zum Nachweis (12) des rekombinierten Signals und andererseits der Verbindung (A-18) der Enden der Schleife (13) umfaßt.

**4.** Gyroskop nach einem der vorangehenden Ansprüche, **dadurch gekennzeichnet, daß** die Vorrichtung (16), die einen doppelt-phasenkonjugierenden "Spiegel" bildet, ein photorefraktiver Kristall ist.

**5.** Gyroskop nach den kombinierten Ansprüchen 3 und 4, **dadurch gekennzeichnet, daß** der Kristall (16) doppelbrechend ist.

**6.** Gyroskop nach Anspruch 4, **dadurch gekennzeichnet, daß** der Kristall (16) derart ist, daß er beide Polarisationen konjugieren kann, beispielsweise ein BSO-Kristall.

**7.** Gyroskop nach einem der vorangehenden Ansprüche, **dadurch gekennzeichnet, daß** die beiden Zweige (L1, L2) der Schleife beiderseits dieser Vorrichtung (16), die einen doppelt-phasenkonjugierenden "Spiegel" bildet, im wesentlichen von gleicher Länge sind.

**8.** Gyroskop nach einem der vorangehenden Ansprüche, **dadurch gekennzeichnet, daß** das optische Element (18), das die Verbindung zwischen den beiden Enden der Schleife (13) bildet, symmetrisch ist.

**9.** Gyroskop nach Anspruch 8, **dadurch gekenn-**

**zeichnet, daß** seine Emissionsquelle (11) eine Kohärenzlänge Lc liefert, so daß gilt

$$2d > Lc > e,$$

wobei e die Dicke der Vorrichtung (16) ist, die einen doppelt-phasenkonjugierenden "Spiegel" bildet, und d die Versetzung dieser Vorrichtung (16) gegenüber der Mitte der Schleife (13) ist.

**10.** Gyroskop nach einem der vorangehenden Ansprüche, **dadurch gekennzeichnet, daß** es Mittel zum Phasenmodulieren (14, 15) der Signale am Eingang der Schleife (13) umfaßt.


## Claims

**1.** A gyro of the type having a multimode optical fiber loop (13) in which light propagates in both directions before being recombined, together with a device (16) constituting a phase conjugate "mirror", the gyro being **characterized in that** the device (16) is a double phase conjugate "mirror" and is disposed in the loop (13) so that the light reaches said device from both sides thereof, said device being adapted so that the incident light at each side of the device serves as a pumping wave for phase conjugation of the incident wave arriving at the other side of the device.

**2.** A gyro according to claim 1, **characterized in that** it comprises monomode filter means between the junction (A-18) between the two ends of the loop (13) and means (11) for emitting the light beam together with means (12) for detecting the recombined signal.

**3.** A gyro according to claim 2, **characterized in that** it further includes polarizer means (19) between the junction (A-18) between the ends of the loop (13) and the means (11) for emitting the light beam together with the means (12) for detecting the recombined signal.

**4.** A gyro according to any preceding claim, **characterized in that** the device (16) forming the double phase conjugate "mirror" is a photorefractive crystal.

**5.** A gyro according to claims 3 and 4 taken in combination, **characterized in that** the crystal (16) is birefringent.

**6.** A gyro according to claim 4, **characterized in that** the crystal (16) is of a type capable of conjugating both polarizations, e.g. a crystal of BSO.

7. A gyro according to any preceding claim, **characterized in that** the two branches (L1, L2) of the loop on either side of said device (16) forming a double phase conjugate "mirror" are of substantially equal length.

8. A gyro according to any preceding claim, **characterized in that** the optical element (18) forming the junction between the two ends of the loop (13) is symmetrical.

9. A gyro according to claim 8, **characterized in that** its emission source (11) has a coherent length Lc such that:

$$2d > Lc > e$$

where $\underline{e}$ is the thickness of the device (16) forming the double phase conjugate "mirror", and $\underline{d}$ is the offset of said device (16) relative to the middle of the loop (13).

10. A gyro according to any preceding claim, **characterized in that** it includes means (14, 15) for phase-modulating the signals entering the loop (13).

FIG_1

ART ANTERIEUR

FIG_2

ONDE INCIDENTE
(SENS HORAIRE)

ONDE EMERGENTE
(SENS HORAIRE)

ONDE EMERGENTE
(SENS TRIGONOMETRIQUE)

ONDE INCIDENTE
(SENS TRIGONOMETRIQUE)

FIG_3